Europäisches Patentamt

European Patent Office

Office européen des brevets

(19)

(11) Veröffentlichungsnummer: **0 382 149**
**A1**

## (12) EUROPÄISCHE PATENTANMELDUNG

(21) Anmeldenummer: **90102260.8**

(22) Anmeldetag: **06.02.90**

(51) Int. Cl.⁵: **B25B 23/14**

(30) Priorität: **10.02.89 DE 8901499 U**

(43) Veröffentlichungstag der Anmeldung:
**16.08.90 Patentblatt 90/33**

(84) Benannte Vertragsstaaten:
**AT BE CH DE DK ES FR GB GR IT LI LU NL SE**

(71) Anmelder: **Kress-elektrik GmbH + Co.**
**Elektromotorenfabrik**
**Hechinger Strasse**
**D-7457 Bisingen(DE)**

(72) Erfinder: **Kress, Willy**
**Breitenwasen 21**
**D-7457 Bisingen(DE)**

(74) Vertreter: **Otte, Peter, Dipl.-Ing.**
**Tiroler Strasse 15**
**D-7250 Leonberg(DE)**

(54) **Kraftangetriebenes Schraubwerkzeug.**

(57) Bei einem kraftangetriebenen Schraubwerkzeug mit einem elektrischen Antriebsmotor mit einem einstellbaren Tiefenanschlag und einer das Schraubwerkzeug aufnehmenden und relativ zum Tiefenanschlag verschiebbaren Antriebswelle sind eine erste Formschluß-Kupplung und eine zweite bei Erreichen des Grenzdrehmoments ansprechende Schleppkupplung vorgesehen, wobei am antriebswellenseitigen Kupplungsteil (15b) mindestens eine axial nach außen zum Schraubwerkzeug gerichtet offene Ausnehmung in Form einer Führungstasche (20) gebildet ist, deren Ausnehmungsgrund zur Antriebswellenlängsachse schräg verläuft. In die Führungstasche (20) greift ein an der Antriebswelle drehfester Querstift (19) ein zur Bildung der Schleppkupplung.

**Fig.1**

EP 0 382 149 A1

## Kraftangetriebenes Schraubwerkzeug

Stand der Technik

Die Erfindung betrifft ein kraftangetriebenes Schraubwerkzeug nach dem Oberbegriff des Anspruchs 1. Bei einem bekannten Schraubwerkzeug dieser Art (DE-PS 36 37 852) ist eine Schleppkupplung vorgesehen, die nach Überschreiten des Grenzdrehmoments durch die eingestellte Schraubtiefe den Formschluß einer Klauenkupplung aufhebt, also zwischen den Stirnflächen der einander gegenüberstehenden Klauen der beiden die Klauenkupplung bildenden Kupplungsteile einen hinreichenden Zwischenraum gewährleistet. Der Grund für diese Trennung liegt darin, daß bei einem Schraubwerkzeug mit Tiefenanschlag die Antriebswelle für den Schraubendreher sich relativ zum Werkzeug, welches mit dem Tiefenanschlag fest verbunden ist, axial nach vorn verschiebt und auf diese Weise zwar durch Mitnahme des einen Kupplungsteils der Klauenkupplung ein, wenn auch nur allmähliches Lösen der Klauenkupplung bewirkt, dennoch im Trennungsübergang bei weiter andauernder Belastung des Schraubwerkzeugs das Bestreben besteht, den Eingriff aufrecht zu erhalten, wodurch die Klauen der Klauenkupplung aneinander vorbeiratschen oder mit erheblichem Geräusch aufeinander schlagen. Dies ist nicht nur störend, sondern kann auch einen beträchtlichen Verschleiß im Bereich dieser die Trennung der Antriebswelle vom elektrischen Antriebsmotor bewirkenden Klauenkupplung hervorrufen. Als Folge dieser Erscheinungen treten auch Vibrationen und eine Wärmeentwicklung auf.

Um diesem Problem abzuhelfen, ist es bekannt (DE-PS 35 10 605), zwischen die beiden Hälften der Klauenkupplung bei einem Schraubwerkzeug eine ebenfalls Klauen aufweisende, federbelastete Zwischenscheibe anzuordnen, die frei drehbar und axial verschiebbar auf der Werkzeugantriebswelle angeordnet ist. Stirnseitig steht diese Zwischenscheibe auf ihrer einen Seite über Nocken und auf der anderen Seite über Klauen mit den entsprechend komplementär ausgebildeten angrenzenden Kupplungsteilen in Verbindung, wobei auf einer Seite die Klauen axial aushebende Schrägflächen aufweisen, so daß sich die Zwischenscheibe auch axial verschieben kann. Diese ermöglicht dann in dem Moment, in welchem das Grenzdrehmoment erreicht ist bzw. mit anderen Worten, in welchem sich die axial verschiebliche Antriebswelle so weit nach außen bewegt hat, daß die Nocken des einen Kupplungsbereichs erstmalig kein Drehmoment übertragen können, da sie außer Eingriff geraten, eine vollständige, federunterstützte Trennung dieser Kupplungsteile, da in diesem Moment auf der anderen Seite der Zwischenscheibe die Klauen von den Schrägflächen abrutschen und sich hierdurch der axiale Abstand im Nockenübertragungsbereich der Kupplung ergänzend öffnet.

Problematisch ist bei dieser Lösung allerdings, daß durch die zusätzliche Anordnung der Zwischenscheibe ein erhöhter Raumbedarf entsteht und auch der Aufbau insgesamt komplizierter wird. Insbesondere stellt diese axial und radial frei bewegliche Zwischenscheibe ein zusätzliches, dem Verschleiß unterworfenes und daher die Störanfälligkeit des Geräts gegebenenfalls erhöhendes Glied dar.

Dieser Problematik versucht im übrigen das kraftgetriebene Schraubwerkzeug der eingangs genannten Veröffentlichung (DE-PS 36 37 852) dadurch zu begegnen, daß auf ein Zwischenkupplungsteil, also die zusätzliche Zwischenscheibe vollständig verzichtet wird und der Übergangsbereich zwischen dem antriebswellenseitigen Kupplungsteil der Klauenkupplung und der Antriebswelle in einer besonderen Weise, hierdurch eine Schleppkupplung bildend, ausgebildet wird. Diese Schleppkupplung läßt eine relative Drehbewegung zwischen der Antriebswelle und diesem Kupplungsteil nur für einen geringen Winkel zu und wird dadurch realisiert, daß ein an der Antriebswelle drehfest angeordneter Querstift in geschlossene Bohrungen oder schräge Querführungen am Kupplungsteil eingreift. Durch diese schrägen Anschlagflächen wird gleichzeitig erreicht, daß bei einem Wandern des Querstiftes in seinen Führungen eine axiale Relativverschiebung zwischen dem Kupplungsteil und der Antriebswelle auftritt, die beim Auskuppeln des Geräts bei Erreichen der gewünschten Schraubtiefe in der bekannten Weise sicherstellt, daß die Trennung der Klauenkupplung bei erstmaligem Verschwinden des übertragenden Drehmoments (Erreichung des Grenzdrehmoments) durch Abstandsvergrößerung vollständig wird. Problematisch ist bei dieser bekannten Lösung allerdings, daß man nicht nur in den antriebswellenseitigen Kupplungsteil der Klauenkupplung Führungen einarbeiten muß, die als geschlossene Hohlräume auftreten, mit der Notwendigkeit der entsprechenden Schrägflächen, was sich nur sehr schwer bewerkstelligen läßt, sondern auch der Zusammenbau der Teile wird nicht unerheblich kompliziert.

Davon ausgehend liegt daher der vorliegenden Erfindung die Aufgabe zugrunde, im Schleppkupplungsbereich eines solchen kraftangetriebenen Schraubwerkzeugs erhebliche Vereinfachungen einzuführen, bei gleichzeitiger Beibehaltung der durch die Schrägflächen im Übergang bewirkten schnellen Auskuppelvorgänge bei Erreichen des Grenzdrehmoments.

Vorteile der Erfindung

Die Erfindung löst diese Aufgabe mit den kennzeichnenden Merkmalen des Hauptanspruchs und hat den Vorteil, daß die Mitnahmetaschen oder Führungen für den Schleppkupplungsbereich axial offen sind, so daß diese bei der Herstellung ohne größere Probleme bei der (spanab hebenden) Formung in die entsprechenden Teile eingearbeitet werden können, beispielsweise durch Fräsen oder Stoßen und daß darüber hinaus auch der Zusammenbau problemlos möglich ist, da die Teile nur einfach aneinandergesetzt zu werden brauchen, ohne daß es im teilzusammengebauten Zustand noch notwendig wäre, komplizierte Arbeitsvorgänge wie das Einbringen von Querstiften und deren Arretierung vornehmen zu müssen.

Besonders vorteilhaft ist, daß es der vorliegenden Erfindung gelingt, die bei solchen kraftangetriebenen Schraubwerkzeugen stets erforderliche Einrück- und Trennkupplung, die normalerweise als Klauenkupplung ausgebildet ist, in allen ihren Teilen im wesentlichen unverändert zu belassen und lediglich im Bereich des Übergangs zwischen dem antriebswellenseitigen Kupplungsteil der Klauenkupplung und der Antriebswelle selbst eine nach außen offene und frei zugängliche Mitnahmeeinrichtung vorzusehen, die durch einen Schrägflächenbereich die relative axiale Beweglichkeit zwischen der Antriebswelle und diesem Kupplungsteil sicherstellt. Hierdurch wird bei Aufhebung des Drehmoments bei Erreichen der vorgegebenen Einschraubtiefe eine federunterstützte Relativbewegung zwischen der Antriebswelle und diesem ihr zugewandten Kupplungsteil der Klauenkupplung möglich, die so gerichtet ist, daß der Abstand zwischen der Welle und dem Kupplungsteil geringer wird bzw. das Kupplungsteil auf einen Anschlag im Wellenbereich zurückfällt. Dies führt zu einer entsprechenden Öffnungsunterstützung im Klauenbereich der Kupplung, so daß diese Kupplung unmittelbar in dem Moment, in welchem sie erstmals kein Dreh moment mehr übertragen kann, also ihre Zähne oder Klauen sich voneinander lösen, diese Lösebewegung sofort weiter geführt wird durch die soeben erwähnte Relativbewegung zwischen Antriebswelle und dem zugeordneten Kupplungsteil, so daß eine unwiderrufliche Öffnung der Klauenkupplung ohne Ratschen und eventuelles Schlagen möglich ist.

Durch die in den Unteransprüchen aufgeführten Maßnahmen sind vorteilhafte Weiterbildungen und Verbesserungen der Erfindung möglich. Besonders vorteilhaft ist die Anordnung eines Mitnahme-Querstifts im Bereich der hierdurch realisierten Schleppkupplung an der Antriebswelle, jedoch außerhalb der Klauenkupplung, so daß dieser Mitnahmequerstift lediglich von außen an die antriebswellenseitige Stirnfläche dieses zugewandten Kupplungsteils der Klauenkupplung anschlägt und dort in entsprechend geformte, also axial offene und die Aufnahme des Stiftes ermöglichende Taschen einfällt. Der Taschengrund ist dann schräg verlaufend ausgeführt, so daß der Stift je nach der eingenommenen relativen Drehposition von Antriebswelle und Kupplungsteil in unterschiedlicher Höhe in der ihn jeweils führenden und aufnehmenden Tasche anliegt. Hierdurch ist sichergestellt, daß bei Übertragen von Drehmoment beim eigentlichen Schraubvorgang dieser Kupplungsteil von der Antriebswelle weggedrückt und daher im Klauenkupplungsbereich ein fester formschlüssiger Eingriff aufrechterhalten wird. Dies ändert sich in dem Moment, in welchem bei Erreichen des Grenzdrehmoments der Stift in seiner Aufnahmetasche nach innen wandern kann, wodurch der Abstand zwischen diesem Kupplungsteil und der Antriebswelle schrumpft und sich, wie erwähnt, der Abstand im Klauenbereich unterstützend vergrößert.

Zeichnung

Ausführungsbeispiele der Erfindung sind in der Zeichnung dargestellt und werden in der nachfolgenden Beschreibung näher erläutert. Es zeigen:

Fig. 1 stark vergrößert im Längsschnitt und lediglich im Ausschnitt den Kupplungsbereich eines kraftangetriebenen Schraubwerkzeugs - zum vollständigen Verständnis und zur besseren Erläuterung der hier für die Erfindung nicht wesentlichen Bereiche kann auf die genannten Veröffentlichungen DE-PS 36 37 825 bzw. DE-PS 35 10 605 verwiesen werden - und die

Fig. 2 in einer Seitenansicht und teilweise im Schnitt den gleichen Kupplungs-Übergangsbereich eines kraftangetriebenen Schraubwerkzeugs wie in Fig. 1, während die

Fig. 3 einen Querschnitt längs der Linie III-III der Fig. 2 zeigt.

Beschreibung der Ausführungsbeispiele

Der Grundgedanke vorliegender Erfindung besteht darin, den Bereich der Schleppkupplung zwischen der Antriebswelle und dem zugewandten Kupplungsteil der Klauenkupplung dort, wo Flächen aneinandergrenzen, offen auszubilden derart, daß in einem Teil bzw. in der Stirnfläche eines Teiles axial in Richtung auf das andere Teil offene Führungsflächen bzw. Aufnahmetaschen gebildet sind, in welche ein Mitnahmeelement vom anderen Teil eingreift. Dabei sind Abmessungen und Flächen der Aufnahmetasche so ausgebildet, daß das Mitnahmeelement des anderen Teils eine begrenzte Drehbewegung und hierdurch gleichzeitig veranlaßt eine axiale Verschiebebewegung unter der Einwirkung dieser Drehbewegung durchführt.

Dabei braucht das in die Führungstaschen eingreifende Mitnahmeteil nicht fest mit dem jeweils anderen Teil verbunden zu sein, sondern kann auch in diesem lediglich drehfest gehalten sein.

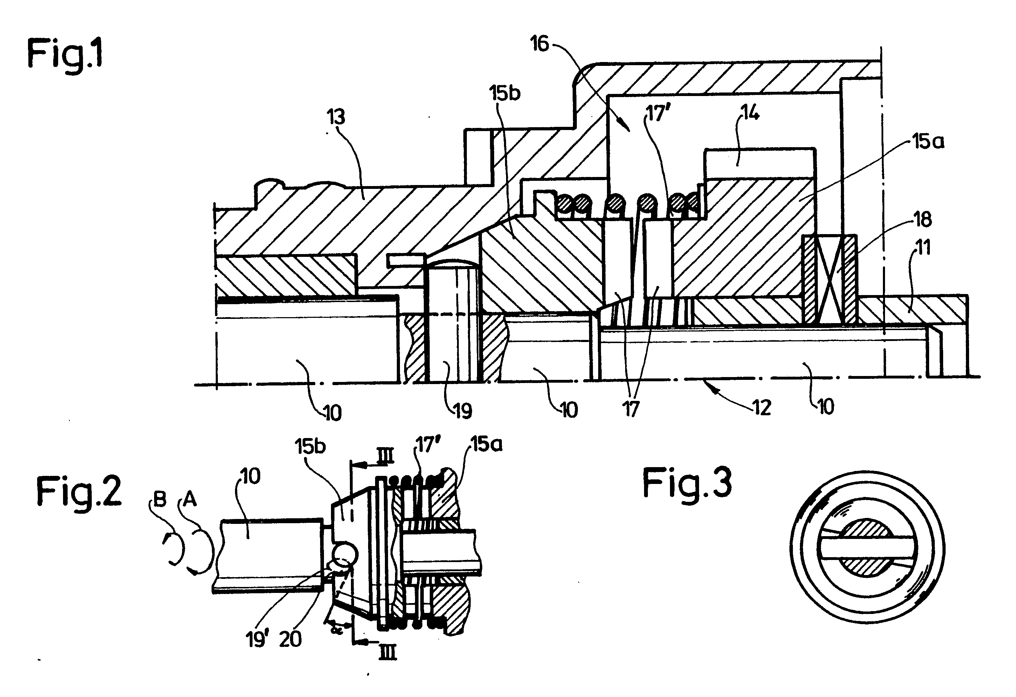

In Fig. 1 ist die abgetreppte Antriebswelle mit 10 und ein sie auf der in der Zeichenebene rechten Seite aufnehmendes, gehäusefestes Lager mit 11 bezeichnet. Dabei stellt der in Fig. 1 gezeigte Getriebeteil 12 des sonst nicht weiter dargestellten kraftangetriebenen Schraubwerkzeugs einen Zwischenbereich dar, wobei sich in der Zeichenebene nach rechts Antriebsmotor, Handgriff u. dgl. anschließen, während in der Zeichenebene nach links der sich über den angedeuteten Gehäuseteil 13 fortsetzende Endbereich der Antriebswelle 10 ein nicht dargestelltes Schraubwerkzeug aufnimmt.

Der nicht dargestellte Antriebsmotor greift mit einem ebenfalls nicht dargestellten Ritzel in einen Zahnkranz 14 ein, der an einem ersten Kupplungsteil 15a einer Klauenkupplung 16 angeordnet ist, deren Klauen mit 17 bezeichnet sind.

Das zweite Kupplungsteil der Klauenkupplung 16 trägt das Bezugszeichen 15b und wird durch eine an beiden Kupplungsteilen 15a, 15b jeweils stirnseitig angreifende Feder 17' vom bei dem dargestellten Ausführungsbeispiel axial feststehenden Kupplungsteil 15a auf Abstand gehalten. Das Kupplungsteil 15a ist dabei, gegebenenfalls über ein zwischengefügtes Lager 18 vom Gehäuseteil 11 getragen, während das Kupplungsteil 15b auf der Antriebswelle 10 sitzen kann. Dabei besteht zwischen dem Kupplungsteil 15b und der Antriebswelle 10 eine Mitnahmeverbindung nach Art einer Schleppkupplung, die einen Querstift 19 umfaßt, der außerhalb des Kupplungsteil 15b schraubwerkzeugseitig fest mit der Antriebswelle 10 verbunden ist.

Wie am besten der Darstellung der Fig. 2 in Draufsicht entnommen werden kann, greift dieser Mitnahme-Querstift 19 in mindestens eine, vorzugsweise in zwei sich dann diametral gegenüberliegende und zum Querstift axial offene Führungstaschen 20 am zweiten Kupplungsteil 15b ein. Diese Führungstaschen 20 sind als radial nach außen offene und auch axial in Richtung auf den Mitnahme-Querstift 19 offene Ausnehmungen in der Stirnfläche des zweiten Kupplungsteils 15b eingearbeitet, die auf der zu den Klauen 17 abgewandten Seite liegt.

Eine solche Schleppkupplung ist problemlos herzustellen, da die Führungstaschen 20 trotz einer Besonderheit, auf die weiter unten noch eingegangen wird, leicht einzuarbeiten sind, denn sie sind sowohl stirnseitig axial als auch radial nach außen offen und lassen sich daher problemlos in die Stirnfläche des zweiten Kupplungsteils 15b, beispielsweise durch spanabhebende Verformung, durch Stoßen, Funkenerosion o. dgl. einarbeiten.

In ähnlicher Weise wird hierdurch die Montage der Teile erleichtert, denn es ist hierzu lediglich notwendig, die Antriebswelle mit ihrem zum Schraubwerkzeug abgewandten Ende in die sie aufnehmenden Lageröffnungen im Gehäuse so weit einzuschieben, bis der Mitnahmequerstift 19 in die Führungstaschen 20 einfällt.

Wie ebenfalls am besten der Darstellung der Fig. 2 entnommen werden kann, schließ die Fläche des Führungsgrundes jeder Führungstasche 20 mit einer Querachse einen Winkel α ein, so daß dann, wenn der Querstift 19 sich in der Führungstasche 20 in Drehrichtung verschiebt, was aufgrund der größeren Innenabmessungen der Führungstasche 20 mit Bezug auf den Querstift möglich ist, hierdurch gleichzeitig eine axiale Relativbewegung zwischen den beiden Teilen Antriebswelle 10 und zweitem Kupplungsteil 15b resultiert. Diese beiden Teile entfernen sich nämlich dann voneinander, wenn sich die Antriebswelle 10 (siehe Fig. 2) relativ zum zweiten Kupplungsteil 15b in der Drehrichtung des Pfeils A verschiebt, während, wie ohne weiteres nachprüfbar, eine Annäherung dieser beiden Teile dann erfolgt, wenn die relative Verdrehung entsprechend dem Pfeil B verläuft. In diesem letzteren Fall kann der Querstift 19 tiefer in die jeweilige Führungstasche 20 einfallen.

Welche Vorteile und Grundfunktionen hieraus resultieren, läßt sich am besten den weiter vorn genannten beiden Veröffentlichungen entsprechend DE-PS'en 36 37 852 und 35 10 605 entnehmen, so daß hierauf nur noch kurz eingegangen zu werden braucht.

Da die Antriebswelle 10 axial im sie aufnehmenden Werkzeug verschieblich gelagert ist, ergibt sich dann eine Drehmitnahme über die Klauenkupplung 16, wenn die einen Schraubeinsatz (Bit) tragende Antriebswelle gegen eine einzuschraubende Schraube gedrückt wird. Diese Preßkraft überwindet die Rückstell-Öffnungskraft der Feder 17 zwischen den beiden Kupplungsteilen 15a, 15b, die Klauen 17 greifen ineinander und das Ganze wird in der Drehrichtung B (zum Einschrauben) mitgenommen, wobei anfänglich der Querstift 19 in seiner tiefsten Position verbleiben kann (die Mitnahme erfolgt in diesem Fall durch kraftschlüssige Reibung), während bei stärkerem Einschrauben und einem entsprechend größeren Drehmoment allmählich der Mitnahmequerstift 19 in die gestrichelte Position 19' der Führungstasche 20 wandern wird, wo er dann durch formschlüssigen Anschlag für die weitere Drehmitnahme sorgt, wobei allerdings gleichzeitig Antriebswelle 10 und zweites Kupplungsteil 15b auseinandergedrückt worden sind, durch die Wirkung der Schrägfläche (Winkel α).

Erreicht jetzt bei weiter aufrechterhaltenen, sehr starkem Mitnahmedrehmoment der Tiefenanschlag des Gehäuses eine äußere Anschlagfläche, dann wandert notwendigerweise die axialverschiebliche Antriebs welle 10 mit der zweiten Kupplungshälfte 15b in der Zeichenebene nach links, so daß die Klauen 17 der Klauenkupplung 16 sich allmählich voneinander lösen, bis ein Moment erreicht ist, an welchem die Klauen trennen und das übertragende Drehmoment bei Erreichen des Grenzdrehmomentes schlagartig, wenn gegebenenfalls auch nur kurzfristig, zu Null wird. In diesem Moment ist das Drehmoment verschwunden, welches den Mitnahmequerstift 19 an die äußere vordere Anschlagfläche in der Führungstasche 20 gedrückt hat; unter der Wirkung der Feder 17 stellt sich der Mitnahmestift 19 wieder in die in Fig. 2 gezeigte Position, was einer relativen Annäherung zwischen Antriebswelle 10 und zweitem Kupplungsteil 15b entspricht. Da die Antriebswelle 10 sich axial nicht verschieben kann - sie sitzt ja in diesem Moment noch auf der einzuschraubenden Schraube auf -, führt dies zu einem sofortigen vollständigen Abheben der Klauen 17 der Klauenkupplung voneinander um die Spaltbreite, die sich ergibt, wenn der Mitnahmestift 19 die Schrägfläche der jeweiligen Führungstasche 20 jeweils vollständig hinauf bzw. hinunter gelaufen ist. Der hierbei realisierte relative Verdrehwinkel ist in Fig. 3 dargestellt.

Hierdurch ergibt sich eine besonders einfache, kostengünstige, unkomplizierte, verschleißsichere und vor allen Dingen problemlos herzustellende und zu montierende Schleppkupplung im Bereich Getriebe/Klauenkupplung eines kraftgetriebenen Schraubwerkzeugs.

## Ansprüche

1. Kraftangetriebenes Schraubwerkzeug mit einem elektrischen Antriebsmotor, einem einstellbaren Tiefenanschlag, einer das Schraubwerkzeug aufnehmenden und relativ zum Tiefenanschlag verschiebbaren Antriebswelle sowie mit zwei zwischen Antriebsmotor und Antriebswelle hintereinander liegenden Mitnahmekupplungen, wobei eine erste Kupplung (Klauenkupplung) in der Kuppelstellung das Antriebsdrehmoment durch Formschluß auf die Antriebswelle überträgt und die zweite Kupplung als bei Erreichen des Grenzdrehmoments durch die eingestellte Schraubtiefe ansprechende Schleppkupplung ausgebildet ist, die den Formschluß der ersten Kupplung dadurch aufhebt, daß ein mit der Antriebswelle in Wirkverbindung stehendes Teil das antriebswellenseitige Kupplungsteil (15b) der ersten Kupplung (16) durch eine gleichzeitig in Axial-und in Drehrichtung verlaufende, federunterstützte Bewegung von dem motorseitigen Kupplungsteil (15a) abhebt, dadurch gekennzeichnet, daß am antriebswellenseitigen Kupplungsteil (15b) minde stens eine axial nach außen zum Schraubwerkzeug gerichtet offene Ausnehmung in Form einer Führungstasche (20) gebildet ist, deren Ausnehmungsgrund zur Antriebswellenlängsachse schräg verläuft, in welche Führungstasche (20) der an der Antriebswelle drehfeste Teil als Querstift (19) eingreift, oder umgekehrt - zur Bildung der Schleppkupplung.

2. Kraftangetriebenes Schraubwerkzeug nach Anspruch 1, dadurch gekennzeichnet, daß die Trennbewegung des zweiten Kupplungsteils (15b) durch einen gehäusefesten Anschlag oder durch einen von der Antriebswelle (10) gebildeten Anschlag begrenzt ist.

3. Kraftangetriebenes Schraubwerkzeug nach Anspruch 1 oder 2, dadurch gekennzeichnet, daß die Antriebswelle (10) mit ihrem zum Schraubwerkzeug abgewandten Wellenende von einer gehäusefesten Lagerung aufgenommen ist.

4. Kraftangetriebenes Schraubwerkzeug nach einem der Ansprüche 1-3, dadurch gekennzeichnet, daß die gehäusefeste Lagerung (11) für die Antriebswelle (10) gleichzeitig mit ihrem Außenumfang, gegebenenfalls über ein Drucklager (Nadellager oder Kugellager 18) den ersten Kupplungsteil (15a) der Klauenkupplung (16) axial unverschieblich lagert.

Fig.1

Fig.2

Fig.3

EP 0 382 149 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | DE - A1 - 3 015 423 (BOSCH) * Fig. 2 * ---- | 1 | B 25 B 23/14 |

**RECHERCHIERTE SACHGEBIETE (Int Cl⁵)**

B 25 B 21/00
B 25 B 23/00

Der vorliegende Recherchenbericht wurde für alle Patentansprüche erstellt.

| Recherchenort | Abschlußdatum der Recherche | Prüfer |
|---|---|---|
| WIEN | 19-04-1990 | BENCZE |